# EUROPEAN PATENT SPECIFICATION

(11) **EP 2 641 004 B1**
(45) Date of publication and mention of the grant of the patent: **19.07.2017**
(21) Application number: 10859658.6
(22) Date of filing: 15.11.2010
(51) Int. Cl.: F16K 3/02, F16K 5/06

(54) **FLOW METERING VALVE**
DURCHFLUSSMESSVENTIL
VALVE RÉGULATRICE DE DÉBIT

(43) Date of publication of application: 25.09.2013
(73) Proprietor: FMC Technologies, Inc., Houston, TX 77067 (US)
(72) Inventor: WALTERS, Sean, Edinburgh Scotland EH12 5BB (GB); BECK, Andrew, Larbert Scotland FK5 4JF (GB); COSTELLO, Laurie, Edinburgh Scotland EH11 2JU (GB); MULHOLLAND, John, Dunfermline Fife KY12 0QT (GB); WEE, Arnstein, N-4070 Randaberg (NO)
(74) Representative: Anderson, James Edward George
(86) International application number: PCT/US2010/056698
(87) International publication number: WO 2012/067604

(56) References cited:
- EP-A1- 1 130 296
- DE-U1- 29 702 565
- US-A- 2 344 747
- US-A- 2 351 775
- US-A- 3 357 491
- US-A- 3 410 138
- US-A- 4 646 624
- US-A1- 2002 117 211
- US-B2- 7 251 935

## Description

### BACKGROUND

The disclosed subject matter relates generally to fluid systems manufacturing and, more particularly, to a flow metering valve.

In the hydrocarbon industry, meters are employed to measure large quantities of fluid, such as oil, that are transferred from one entity to another (e.g., a custody transfer). One of the fundamental measurements in multiphase metering is volumetric flow rate. Typically, volumetric flow rate measurement is achieved by creating a restriction in the flow path and measuring the pressure drop across the restriction. A common instrument for creating this measurement is a venturi.

In some applications, the piping through which the volumetric flow rate is to be measured is also used to perform mechanical operations. For example, to monitor a piping section a sensor module, or "pig" may be passed through the line. The pig may seal to the inside diameter of the piping so that the pressure created propels the module through the piping. Such a module cannot pass through a flow metering section sue to the restricted cross-section. In another example, for a hydrocarbon production well, a well tree *(i.e.,* or Christmas tree) may be attached to the well head. The well tree includes various valves and instrumentation for monitoring the well and controlling flow there from. It is difficult to integrate a flow metering device with a well tree due to the length of metering section and also due to the metering profile, which reduces the inside diameter of the piping. Due to the reduction in diameter, an operator performing workover operations would be prohibited from running certain wireline tools through the metering profile. A metering package coupled to the well tree would have to be removed from the well or bypassed to allow the insertion of wireline tools through the production flow path.

This section of this document is intended to introduce various aspects of art that may be related to various aspects of the disclosed subject matter described and/or claimed below. This section provides background information to facilitate a better understanding of the various aspects of the disclosed subject matter. It should be understood that the statements in this section of this document are to be read in this light, and not as admissions of prior art. The disclosed subject matter is directed to overcoming, or at least reducing the effects of, one or more of the problems set forth above.

US-A-2344747 discloses a fluid control mechanism comprising a gate comprising openings alignable with a flow passage, the openings having different diameters.

### BRIEF SUMMARY

The following presents a simplified summary of the disclosed subject matter in order to provide a basic understanding of some aspects of the disclosed subject matter. This summary is not an exhaustive overview of the disclosed subject matter. It is not intended to identify key or critical elements of the disclosed subject matter or to delineate the scope of the disclosed subject matter. Its sole purpose is to present some concepts in a simplified form as a prelude to the more detailed description that is discussed later.

One aspect of the disclosed subject matter is seen in a valve, comprising a housing; a stem supported by the housing; a valve member coupled to the stem; wherein the valve member comprises a gate having a first passage defined therein with a metering flow profile and a second passage defined therein with an unrestricted flow profile, the second passage having a diameter substantially equal to a diameter of a flow passage defined through said housing; wherein the first and second passages are in use selectively alignable with said flow passage; wherein the metering flow profile comprises an unrestricted portion and a restricted portion, and the valve further comprises a first pressure port communicating with the restricted portion; and wherein the valve further comprises at least one sensor communicating with the unrestricted portion and with the restricted portion for detecting the pressure difference across the metering flow profile.

Another aspect of the disclosed subject matter is seen in an apparatus including a well tree having a production bore and a flow metering valve as defined above coupled to the well tree and communicating with the production bore which forms the said flow passage.

### BRIEF DESCRIPTION OF THE SEVERAL VIEWS OF THE DRAWINGS

The disclosed subject matter will hereafter be described with reference to the accompanying drawings, wherein like reference numerals denote like elements, and:
Figures 1 and 2 are cross-section views of a flow metering gate valve in accordance with one illustrative embodiment of the present subject matter;
Figure 3 is a cross-section view of a gate member that may be used in the valve of Figure 1 adapted for three positions;
Figure 4 is a cross-section view of a flow metering ball valve in accordance with another illustrative embodiment not according to the invention; and
Figure 5 is a diagram of a well tree including the flow metering gate valve of Figure 1.

While the disclosed subject matter is susceptible to various modifications and alternative forms, specific embodiments thereof have been shown by way of example in the drawings and are herein described in detail. It should be understood, however, that the description herein of specific embodiments is not intended to limit the disclosed subject matter to the particular forms disclosed, but on the contrary, the intention is to cover all modifications, equivalents, and alternatives falling within the spirit and scope of the disclosed subject matter as defined by the appended claims.

### DETAILED DESCRIPTION

One or more specific embodiments of the disclosed subject matter will be described below. It is specifically intended that the disclosed subject matter not be limited to the embodiments and illustrations contained herein, but include modified forms of those embodiments including portions of the embodiments and combinations of elements of different embodiments as come within the scope of the following claims. It should be appreciated that in the development of any such actual implementation, as in any engineering or design project, numerous implementation-specific decisions must be made to achieve the developers' specific goals, such as compliance with system-related and business related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure. Nothing in this application is considered critical or essential to the disclosed subject matter unless explicitly indicated as being "critical" or "essential."

The disclosed subject matter will now be described with reference to the attached figures. Various structures, systems and devices are schematically depicted in the drawings for purposes of explanation only and so as to not obscure the disclosed subject matter with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, *i.e.,* a definition that is different from the ordinary and customary meaning as understood by those skilled in the art, is intended to be implied by consistent usage of the term or phrase herein. To the extent that a term or phrase is intended to have a special meaning, *i.e.,* a meaning other than that understood by skilled artisans, such a special definition will be expressly set forth in the specification in a definitional manner that directly and unequivocally provides the special definition for the term or phrase.

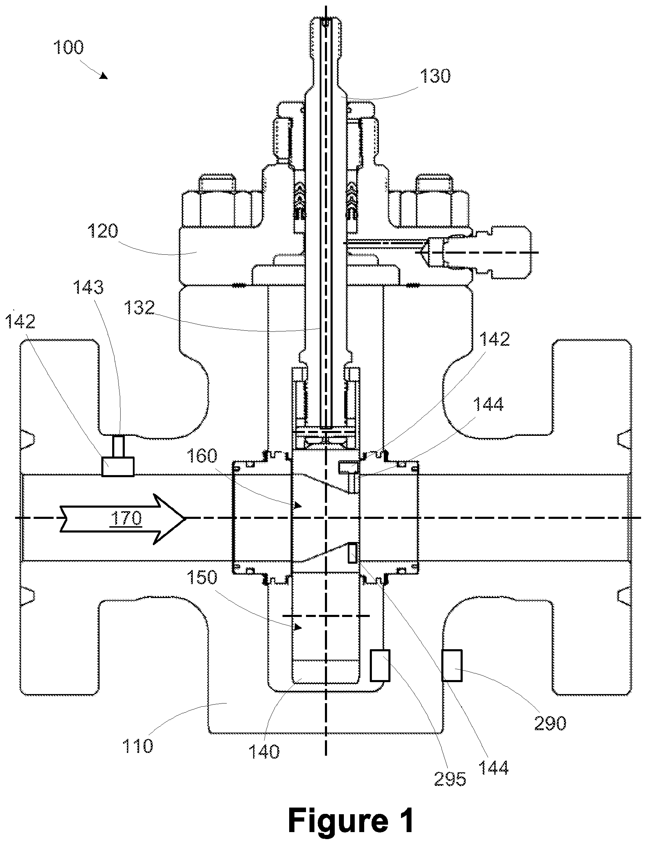

Referring now to the drawings wherein like reference numbers correspond to similar components throughout the several views and, specifically, referring to Figure 1, the disclosed subject matter shall be described in the context of a flow metering gate valve 100. The valve 100 includes a body 110, a bonnet 120, a rising valve stem 130, and a gate 140. For ease of illustration, the valve actuator is not illustrated. Various type of manual, motor-operated, or hydraulic operators are known in the art, and may be used in conjunction with the valve 100.

As illustrated in Figure 1, the gate 140 has two flow passages, an unrestricted passage 150 and a restricted passage 160 having a venturi-type profile. In the illustrated embodiment, the venturi-type profile is a Dall tube profile, which is essentially a shortened venturi tube. Of course, other types of restricted profiles may be used, such as an orifice plate, a v-cone, a flow mixer, *etc.* Such venturi-type profiles may be collectively referred to as metering profiles. Hence, the gate 140 may be referred to as a valve member having a first passage defined therein with a metering flow profile and a second passage defined therein with an unrestricted flow profile. For ease of illustration, and to avoid obscuring the present subject matter, the conventional parts of the valve 100, such as the packing, stem attachment details, bolts, seals, *etc.,* are not described in detail, as they are known to those of ordinary skill in the art.

In Figure 1, the valve 100 is shown in a seated position. In the seated position, the restricted passage 160 is aligned with the flow path 170. In this position, the valve 100 is in a flow metering position. Sensors 142 and ports 143, 144 are defined in the gate 140 for detecting the pressure across the restricted passage 160. One or more ports 132 may also be defined in the stem 130 for passing an electrical connector to communicate the sensed pressure(s). A differential pressure across the restricted passage 160 may be measured using the sensors 142 and ports 143, 144, to determine the volumetric flow rate. Both absolute pressures may be measured to determine the differential pressure, or a differential pressure sensor may be used. Increased accuracy may be obtained by measuring both differential pressure and the absolute pressure of at least the restricted flow path. The particular location of the sensors 142 and ports 143, 144 for measuring the pressures may vary. For example, ports may be provided in the gate 140 or the body 110. It is also contemplated that one or more ports or sensors may be provided in the piping upstream of the valve to measure the unrestricted pressure. Those of ordinary skill in the art are familiar with techniques for taking flow measurements across a venturi profile. For example, techniques for measuring flow parameters using a flow restricting device are described in WO2007/129897, entitled "A METHOD AND APPARATUS FOR TOMOGRAPHIC MULTIPHASE FLOW MEASUREMENTS."

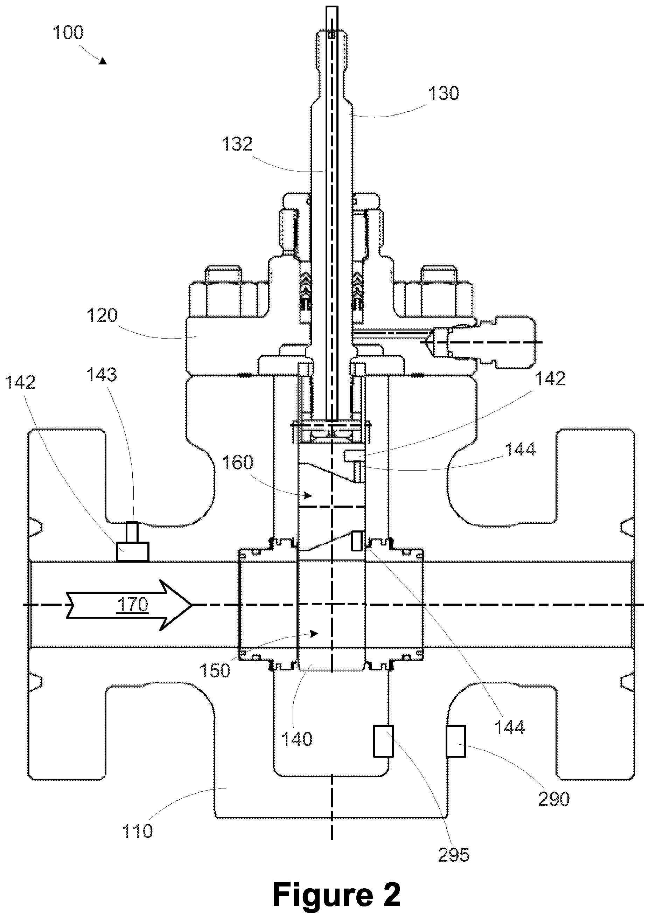

In Figure 2, the valve 100 is shown in a back-seated position. In this position, the unrestricted passage 150 is aligned with the flow path 170. The use of the unrestricted passage 150 allows full flow with minimal pressure losses across the valve 100. Because the unrestricted passage 150 has substantially the same diameter as the attached piping, equipment, such as wire line tools, may be passed through the valve unhindered.

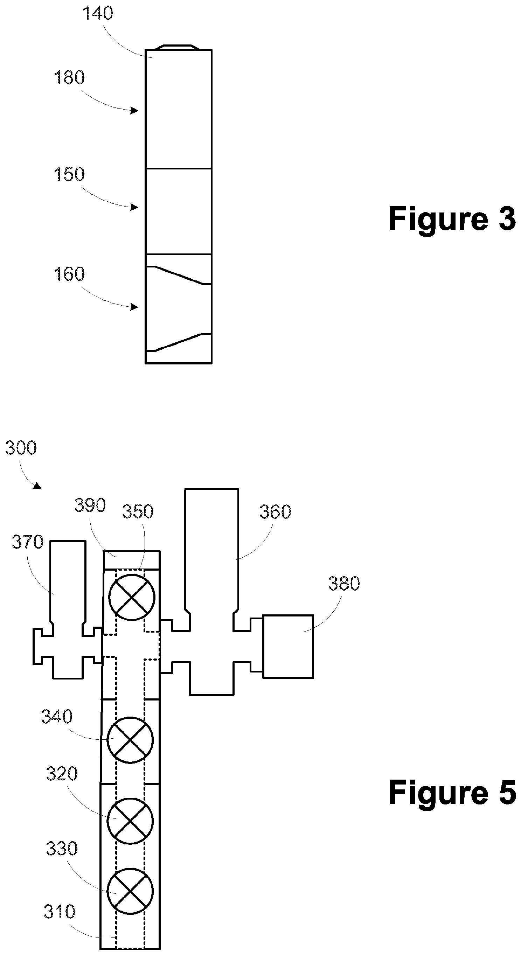

Turning now to Figure 3, a cross-section view of an alternative gate 140' is provided. The gate 140 of Figure 1 includes an open position *(i.e.,* unrestricted) and a metering position. In some instances, it may be useful to close the valve entirely. To achieve this capability, the gate 140' includes the unrestricted passage 150, the restricted passage 160, and a solid portion 180 that stops the flow through the valve 100. To accommodate the gate 140', the body 110, bonnet 120, and/or stem 130 dimensions may be modified. In the illustrated embodiment, the solid portion 180 is aligned with the flow path 170 when the gate 140' is in the seated position, the restricted passage 160 is aligned with the flow path 170 when the gate 140' is in the back-seated position, and the unrestricted passage 150 is aligned with the flow path 170 when the gate 140' is in an intermediate position. The open and metering positions are determined by hard travel limits of the valve stem 130. The valve 100 may be placed intermediate unrestricted position by providing limits on the actuator or by monitoring a pressure drop across the valve 100. If the unrestricted passage 150 is properly aligned, the pressure drop should be negligible.

The valve 100 described in Figure 1 may also be adapted for an application where a flow metering position and closed position is employed. In such an embodiment, the valve gate would have a restricted passage 160 as in Figures 1 and 2, and a solid portion 180 as in Figure 3. For this embodiment, the unrestricted passage 150 would not be defined in the gate.

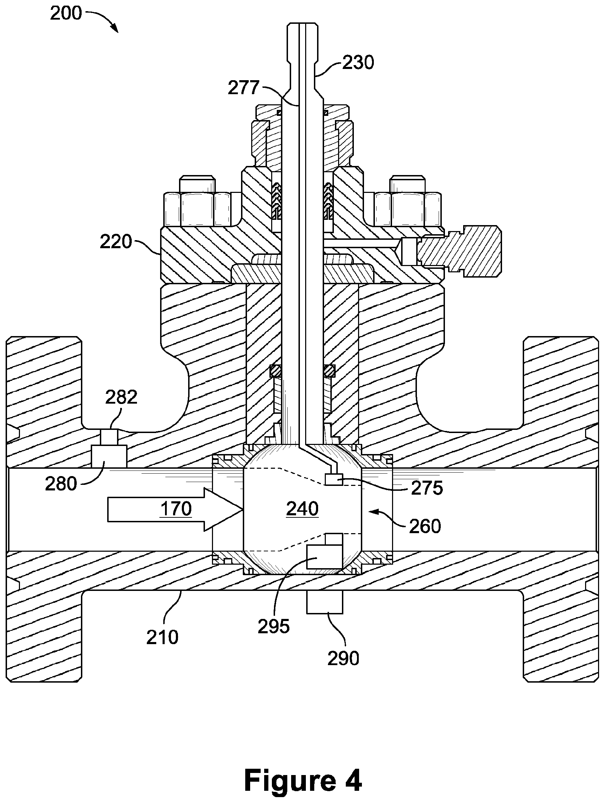

Figure 4 is a cross-section of a flow metering ball valve 200 in accordance with another illustrative embodiment not according to the invention. The valve 200 includes a body 210, a bonnet 220, a valve stem 230, and a ball 240. Again, various type of manual, motor-operated, or hydraulic operators are known in the art, and may be used in conjunction with the valve 200.

The ball 240 has a restricted passage 260 having a venturi-type profile. The ball 240 may be referred to as a valve member having a first passage defined therein with a metering flow profile. For ease of illustration, and to avoid obscuring the present subject matter, the conventional parts of the valve 200, such as the packing, stem attachment details, bolts, seals, *etc.,* are not described in detail, as they are known to those of ordinary skill in the art.

In Figure 4, the ball valve 200 is shown in an open position. The valve 200 may be placed in a closed position thereby preventing flow by rotating the stem 230 by 90 degrees. In the open position, the restricted passage 260 is aligned with the flow path 270. In this position, the valve 200 is in a flow metering position. Differential and or absolute pressures across the restricted passage 260 may be measured to determine the volumetric flow rate. In one embodiment, a pressure sensor 275 may be provided in the ball 240 and a port 277 may be formed in the ball to electrically transmit the sensed pressure. A sensor 280 and port 282 may also be provided for measuring the unrestricted pressure. The particular location of the sensors and ports for measuring the differential and/or absolute pressure(s) may vary. For example, ports may be provided in the ball 240 or the body 210. It is also contemplated that one or more ports may be provided in the piping upstream of the valve to measure the unrestricted pressure.

There are various techniques for implementing the pressure sensing in the flow metering valve 100, 200. Pressure sensors may be located inside or outside the pressure boundary of the valve 100, 200. In one embodiment, the need to port the sensed pressure or route wires through the pressure boundary of the valve 100, 200 may be eliminated by using a non-penetrating cross-pressure-vessel transceiver device within the pressure environment for measuring the restricted pressure, the unrestricted pressure, or both. As shown in Figures 1, 2, and 4, a controller 290 housed outside the pressure environment may communicate with, and can provide power to a sensor 295 within the pressure environment. Alternatively, a battery or energy harvesting device may be provided to power the sensor 295. Although the non-penetrating sensor 295 and sensors 142 with associated penetrations are illustrated on the same drawing, it is contemplated that both need not be present for measuring the same parameter. However, they may be mixed. For example, a non-penetrating sensor 295 may be used to measure the restricted pressure, while a penetrating sensor 142 may be used to measure the unrestricted pressure.

A single transceiver device or multiple transceiver devices may be employed as needed for specific applications to transfer power and communication signals. Exemplary, non-penetrating interfaces are described in United States Patent Publication No. 2008/0070499, entitled "MAGNETIC COMMUNICATION THROUGH METAL BARRIERS," and United States Patent Publication No. 2010/0027379, entitled "ULTRASONIC THROUGH-WALL COMMUNICATION (UWTC) SYSTEM,". These publications describe communication devices that use a magnetic or ultrasonic signal to communicate and/or provide power through the pressure boundary without actually penetrating the boundary.

Figure 5 is a simplified diagram of an illustrative well tree assembly 300 *(i.e.,* or Christmas tree) having a production bore 310 defined therein. Although a surface tree is illustrated, the concepts described herein may also be applied to a subsea installation. The well tree assembly 300 includes an upper master valve 320, a lower master valve 330, a flow metering valve 340, and a swab valve 350. A flow wing valve 360 and a kill wing valve 370 are coupled to outlets of the well tree assembly 300, and an elbow 380 is coupled to the flow wing valve 360. A tree cap 390 is provided above the swab valve 350. In the illustrated embodiment, the flow metering valve 340 is the valve 100 of Figure 1. The unrestricted passage 150 shown in Figure 1 allows well intervention though the well tree 300. If the alternative gate 140' of Figure 2 were used with the valve 340, the lower master valve 330 could be omitted, as its isolation functionality could be performed using the flow metering valve 340. The valves 310-370 may be manually operated or actuated (*e.g*., hydraulically, or motor operated) depending on the particular implementation. Moreover, as known to those of ordinary skill in the art, the relative positions of the valves 310-370 may vary, and some valves may be omitted or additional valves may be added. The orientation of the tree 300 may also vary *(e.g.,* vertical or horizontal).

The particular embodiments disclosed above are illustrative only, as the disclosed subject matter may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope of the claims. Accordingly, the protection sought herein is as set forth in the claims below.

## Claims

1. A valve, comprising:
a housing;
a stem (130) supported by the housing;
a valve member (140) coupled to the stem;
wherein the valve member comprises a gate (140) having a first passage (160) defined therein with a metering flow profile and a second passage (150) defined therein with an unrestricted flow profile, the second passage having a diameter substantially equal to a diameter of a flow passage (170) defined through said housing;
wherein the first and second passages (160, 150) are in use selectively alignable with said flow passage (170); **characterised in that** the metering flow profile comprises an unrestricted portion and a restricted portion, and the valve further comprises a second pressure port (144) communicating with the restricted portion and a first pressure port (143) communicating with the unrestricted portion wherein the valve further comprises at least one sensor (142) communicating with the unrestricted portion and with the restricted portion by means of said first and second ports for detecting the pressure difference across the metering flow profile.

2. The valve of claim 1, wherein the gate comprises a solid portion (180) larger than a diameter of a flow passage (170) defined through said housing.

3. The valve of claim 1, wherein the valve stem (130) comprises a rising valve stem.

4. The valve of claim 1, wherein the second pressure port (144) is defined in the gate (140).

5. The apparatus of claim 4, wherein the first pressure port (143) is defined in the housing.

6. The apparatus of claim 4 wherein said at least one pressure sensor is a differential pressure sensor coupled to the first and second ports (143, 144).

7. The valve of claim 1, further comprising a controller (290) disposed outside a pressure boundary of the flow metering valve, wherein the at least one pressure sensor is disposed within the pressure boundary, and the controller is operable to communicate with the at least one pressure sensor through the pressure boundary without penetrating the pressure boundary.

8. The valve of any preceding claim, wherein the metering profile comprises a venturi profile, a Dall tube profile, or an orifice plate.

9. An apparatus, comprising:
a well tree (300) having a production bore (310); and
a flow metering valve according to any preceding claim coupled to the well tree and communicating with the production bore, said flow passage (170) comprising said production bore (310).

## Patentansprüche

1. Ventil, aufweisend:
ein Gehäuse;
einen Schaft (130), gestützt durch das Gehäuse;
ein an den Schaft gekoppeltes Ventilelement (140);
wobei das Ventilelement einen Schieber (140) mit einem ersten Durchlass (160) aufweist, der darin mit einem Messströmungsprofil definiert ist, und mit einem zweiten Durchlass (150), der darin mit einem uneingeschränkten Strömungsprofil definiert ist, wobei der zweite Durchlass einen Durchmesser hat, der im Wesentlichen gleich einem Durchmesser eines Strömungsdurchlasses (170) ist, der durch das Gehäuse definiert ist;
wobei der erste und der zweite Durchlass (160, 150) selektiv auf den Strömungsdurchlass (170) ausrichtbar in Verwendung sind;
**dadurch gekennzeichnet, dass**
das Messströmungsprofil einen uneingeschränkten Abschnitt und einen eingeschränkten Abschnitt aufweist, und das Ventil ferner einen zweiten Druckanschluss (144) aufweist, der mit dem eingeschränkten Abschnitt in Verbindung steht, und einen ersten Druckanschluss (143), der mit dem uneingeschränkten Abschnitt in Verbindung steht, wobei das Ventil ferner mindestens einen Sensor (142) aufweist, der mit dem uneingeschränkten Abschnitt und mit dem eingeschränkten Abschnitt mittels des ersten und des zweiten Anschlusses in Verbindung steht, um die Druckdifferenz über das Messströmungsprofil zu erfassen.

2. Ventil nach Anspruch 1, wobei der Schieber einen festen Abschnitt (180) aufweist, der größer als ein Durchmesser eines Strömungsdurchlasses (170) ist, der durch das Gehäuse definiert ist.

3. Ventil nach Anspruch 1, wobei der Ventilschaft (130) einen steigenden Ventilschaft aufweist.

4. Ventil nach Anspruch 1, wobei der zweite Druckanschluss (144) in dem Schieber (140) definiert ist.

5. Vorrichtung nach Anspruch 4, wobei der erste Druckanschluss (143) in dem Gehäuse definiert ist.

6. Vorrichtung nach Anspruch 4, wobei der mindestens eine Drucksensor ein Differenzdrucksensor ist, der an den ersten und den zweiten Druckanschluss (143, 144) gekoppelt ist.

7. Ventil nach Anspruch 1, ferner aufweisend einen Regler (290), der außerhalb einer druckführenden Umschließung des Durchflussmessventils angeordnet ist, wobei der mindestens eine Drucksensor in der druckführenden Umschließung angeordnet ist, und der Regler betriebsfähig ist, um mit dem mindestens einen Drucksensor über die druckführende Umschließung in Verbindung zu stehen, ohne die druckführende Umschließung zu durchdringen.

8. Ventil nach einem der vorhergehenden Ansprüche, wobei das Messprofil ein Venturiprofil, ein Dall-Rohrprofil oder eine Messblende aufweist.

9. Vorrichtung, aufweisend:
eine Bohrloch-Baumstruktur (300) mit einer Produktionsbohrung (310); und
ein Durchflussmessventil nach einem der vorhergehenden Ansprüche, das mit der Bohrloch-Baumstruktur gekoppelt ist und mit der Produktionsbohrung in Verbindung steht, wobei der Strömungsdurchlass (170) die Produktionsbohrung (310) aufweist.

## Revendications

1. Valve comprenant :
un boîtier ;
une tige (130) supportée par le boîtier ;
un organe de valve (140) couplé à la tige ;
dans laquelle l'organe de valve comprend un robinet (140) possédant un premier passage (160) défini dans celui-ci avec un profil de mesure de débit et un deuxième passage (150) défini dans celui-ci avec un profil de débit non limité, le deuxième passage possédant un diamètre sensiblement égal à un diamètre d'un passage de débit (170) défini à travers ledit boîtier ;
dans laquelle les premier et deuxième passages (160, 150) sont sélectivement alignables en utilisation avec ledit passage de débit (170) ;
**caractérisée en ce que**
le profil de mesure de débit comprend une partie non limitée et une partie limitée, et la valve comprend en outre un deuxième port de pression (144) en communication avec la partie limitée et un premier port de pression (143) en communication avec la partie non limitée ;
dans laquelle la valve comprend en outre au moins un capteur (142) en communication avec la partie non limitée et avec la partie limitée au moyen desdits premier et deuxième ports pour détecter la différence de pression à travers le profil de mesure de débit.

2. Valve selon la revendication 1, dans laquelle le robinet comprend une partie solide (180) plus large qu'un diamètre du passage de débit (170) défini à travers ledit boîtier.

3. Valve selon la revendication 1, dans laquelle la tige de valve (130) comprend une tige montante de valve.

4. Valve selon la revendication 1, dans laquelle le deuxième port de pression (144) est défini dans le robinet (140).

5. Appareil selon la revendication 4, dans lequel le premier port de pression (143) est défini dans le boîtier.

6. Appareil selon la revendication 4, dans lequel ledit au moins un capteur de pression est un capteur de pression différentiel couplé aux premier et deuxième ports (143, 144).

7. Valve selon la revendication 1, comprenant en outre une unité de commande (290) agencée à l'extérieur d'un confinement de pression de la valve de mesure de débit, dans laquelle le au moins un capteur de pression est agencé à l'intérieur du confinement de pression, et l'unité de commande est actionnable pour communiquer avec le au moins un capteur de pression à travers le confinement de pression sans pénétrer le confinement de pression.

8. Valve selon l'une quelconque des revendications précédentes, dans laquelle le profil de mesure comprend un profil venturi, un profil de tube de Dall ou un diaphragme.

9. Appareil, comprenant :
un arbre de puits (300) possédant un puits de production (310) ; et
une valve de mesure de débit selon l'une quelconque des revendications précédentes couplées à l'arbre de puits et en communication avec le puits de production, ledit passage de débit (170) comprenant ledit puits de production (310).
